(19) Europäisches Patentamt / European Patent Office / Office européen des brevets

(11) **EP 2 515 140 B1**

(12) **FASCICULE DE BREVET EUROPEEN**

(45) Date de publication et mention
de la délivrance du brevet:
**21.09.2016 Bulletin 2016/38**

(51) Int Cl.:
**G01S 3/808** *(2006.01)*   **G01S 7/54** *(2006.01)*
**G01S 15/74** *(2006.01)*

(21) Numéro de dépôt: **12164865.3**

(22) Date de dépôt: **20.04.2012**

(54) **Procédé de positionnement acoustique global d'une cible marine ou sous-marine**

Verfahren zur globalen akustischen Positionierung eines Ziels im Wasser oder unter Wasser

Method for global acoustic positioning of a naval or submarine target

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.04.2011 FR 1101255**

(43) Date de publication de la demande:
**24.10.2012 Bulletin 2012/43**

(73) Titulaire: **iXBlue Industries S.A.S.
78160 Marly le Roi (FR)**

(72) Inventeurs:
• **Pennec, Sébastien
29800 LANDERNEAU (FR)**
• **Morvan, Pierre-Yves
29200 BREST (FR)**

(74) Mandataire: **Bordier, Sylvain
Marks & Clerk France
Conseils en Propriete Industrielle
Immeuble Visium
22 avenue Aristide Briand
94117 Arcueil Cedex (FR)**

(56) Documents cités:
**US-A1- 2006 178 829     US-A1- 2009 175 128**

• **PARTHIOT F P ET AL: "A better way to navigate
on deep sea floors", OCEANS '93. ENGINEERING
IN HARMONY WITH OCEAN. PROCEEDINGS
VICTORIA, BC, CANADA 18-21 OCT. 1993, NEW
YORK, NY, USA,IEEE, 18 octobre 1993
(1993-10-18), pages II494-II498, XP010117558,
DOI: 10.1109/OCEANS.1993.326146 ISBN:
978-0-7803-1385-9**
• **AUSTIN T C ET AL: "RATS, a Relative Acoustic
Tracking System developed for deep ocean
navigation", OCEANS '97. MTS/IEEE
CONFERENCE PROCEEDINGS HALIFAX, NS,
CANADA 6-9 OCT. 1997, NEW YORK, NY,
USA,IEEE, US, vol. 1, 6 octobre 1997 (1997-10-06),
pages 535-540, XP010246302, DOI:
10.1109/OCEANS.1997.634422 ISBN:
978-0-7803-4108-1**

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

**Description**

La présente invention se rapporte aux systèmes de positionnement acoustique d'une balise placée sur une cible marine ou sous-marine et à leur fonctionnement.

Un système de positionnement acoustique permet d'établir la position absolue géoréférencée et instantanée d'une balise fixe ou mobile. Parmi les systèmes de positionnement acoustique global connus, les systèmes dits « à base ultra courte » (USBL - Ultra Short Baseline), et les systèmes dits « à base courte » (SBL - Short Baseline) comportent habituellement un réseau de N capteurs acoustiques ou hydrophones disposés en structure d'antenne 2D ou 3D. Cette antenne permet de déterminer la position relative d'une source sonore ou balise émettant une signature acoustique déterministe. La mesure des temps de trajet de l'onde sonore de la source vers les capteurs (TOA - Time Of Arrival) et/ou la mesure de phase (POA - Phase Of Arrival) permettent de déterminer la position relative de la balise. L'utilisation d'une centrale d'attitudes (fournissant les paramètres : Roulis (R), Lacet (L), et Tangage (T)), compensant les effets des mouvements de l'antenne sur le positionnement, associée à une information de géoréférencement (GPS - Global Positioning System), permet de déterminer la position absolue de la balise. Le cycle de positionnement, nommé récurrence, est réitéré périodiquement pour fournir à chaque fois une nouvelle estimation de la position absolue de la balise. Le brevet français 2.851.340 présente un système de positionnement global de type USBL. La précision des systèmes USBL (et celle des systèmes SBL) est en partie conditionnée par la dimension de la structure d'antenne. La distance typique entre les capteurs de l'antenne est inférieure ou égale à 0.5 m dans le cadre de l'USBL et est supérieure au mètre dans le cadre du SBL. La précision d'une antenne de positionnement de ce type est définie comme suit :

$$\sigma_\theta = \frac{\lambda}{d\,\pi\cos(\theta)\sqrt{2\,\eta}} \qquad\qquad 1\text{-}1$$

Dans cette formule, $\lambda$ est la longueur d'onde définie comme le rapport entre la célérité $c$ dans la couche d'eau de l'antenne et la fréquence porteuse $F_0$. L'angle d'incidence de l'onde sonore $\theta$ sur l'antenne, le rapport signal sur bruit $\eta$ et la distance d entre les capteurs déterminent la précision de positionnement du système USBL. Outre les paramètres environnementaux (niveau de bruit, célérité,...) et les paramètres applicatifs (niveau de signal, fréquence porteuse, angle d'incidence, ...), la dimension de l'antenne conditionne la précision du système de positionnement.

Le document US 2006/178829 A1 décrit un dispositif de positionnement acoustique comprenant un émetteur-récepteur de signaux acoustiques de positionnement, un récepteur GPS permettant de positionner le dispositif, et une centrale inertielle. L'émetteur-récepteur génère plusieurs mesures de position, en l'occurrence autant que de sous-marins dont on cherche à estimer la position. Le document Parthiot, François et al: "A better way to navigate on deep sea floors" décrit un dispositif de positionnement acoustique comprenant un récepteur GPS et une centrale inertielle. Le document Austin, Thomas et al: "RATS, a relative acoustic tracking system developed for deep ocean navigation" décrit un dispositif de positionnement acoustique comprenant notamment un récepteur GPS et un réseau de huit hydrophones.

La présente invention a pour objet un procédé de positionnement acoustique global de type USBL ou SBL présentant une précision meilleure que les systèmes conventionnels en exploitant les déplacements successifs du réseau de capteurs.

Selon l'invention, le procédé de positionnement acoustique global d'un transpondeur placé sur une cible marine ou sous-marine se caractérise par une antenne acoustique 2D ou 3D comportant un réseau de N capteurs de type USBL ou SBL disposés sur une plate-forme mobile flottante ou sous-marine ; une centrale inertielle (INS - Inertial Navigation System) apte à mesurer les informations de position et d'orientation de la plate-forme ; un récepteur GPS apte à fournir les coordonnées géoréférencées de la plate-forme en surface ; d'un vélocimètre doppler (DVL - Doppler Velocity Log) apte à fournir les informations de vitesse de la plate-forme sous-marine ; et un calculateur. Le système de positionnement selon l'invention se caractérise en ce qu'en surface, le récepteur GPS alimente en coordonnées géoréférencées la centrale inertielle pour corriger la dérive de cette dernière. Sous la surface, la réception du signal GPS étant impossible, la centrale inertielle est recalée par l'information de vitesse fournie par le DVL. La dite centrale fournissant les informations d'orientation et de déplacement de la plate-forme sur laquelle est disposée le réseau de N capteurs acoustiques pour permettre d'exploiter le principe de traitements par antenne synthétiques. Selon ce principe, les K réponses acoustiques de la balise sont reçues par l'antenne acoustique disposée sur la plate-forme mobile à K instants différents successifs, et donc à K emplacements successifs. Les K positions, déplacements et orientations du réseau de N capteurs acoustiques disposés sur la plate-forme sont mesurées grâce à la centrale inertielle. Sur la base de ces informations, le traitement synthétique intégré dans le calculateur permet de reconstruire, de proche en proche, une antenne acoustique de dimension plus importante que l'antenne classique grâce à laquelle la position de la balise est estimée. La précision obtenue au moyen de l'antenne synthétique correspond à celle d'une antenne classique dont la dimension serait similaire à la distance parcourue pendant les K réceptions successives du signal de la balise. La déficience en précision associée à la dimension initiale du réseau de N capteurs acoustiques de type USBL ou SBL est palliée par l'utilisation du traitement synthétique sur les K réceptions acoustiques.

La présente invention sera mieux comprise à la lecture de la description détaillée d'un mode de réalisation, pris à titre d'exemple non limitatif et illustré par le dessin annexé, sur lequel :

- la figure 1 représente une vue de dessus schématique simplifiée du réseau de capteurs d'une antenne physique connue pour système USBL ou SBL de positionnement global ;
- La figure 2 représente un front d'onde acoustique atteignant le réseau de N capteurs constitutifs du système USBL ou SBL ;
- la figure 3 représente schématiquement les déplacements de l'antenne physique à partir desquels est reconstruite l'antenne synthétique conformément à l'invention ; et,
- la figure 4 est un bloc diagramme des systèmes et des fonctions mises en oeuvre par l'invention pour élaborer une estimation de la position d'une balise.

La présente invention sera décrite ci-dessous en référence à une antenne de positionnement globale de type USBL à géométrie 2D composée de quatre hydrophones, mais il est bien entendu que l'invention n'est pas limitée à ce seul exemple, et qu'elle peut être mise en oeuvre avec des antennes composées de deux hydrophones ou plus, ayant des structures d'antenne 2D ou 3D mais aussi aux systèmes de positionnement de type SBL. Dans l'exemple décrit ci-dessous, cette antenne est disposée sur une plate-forme marine mobile.

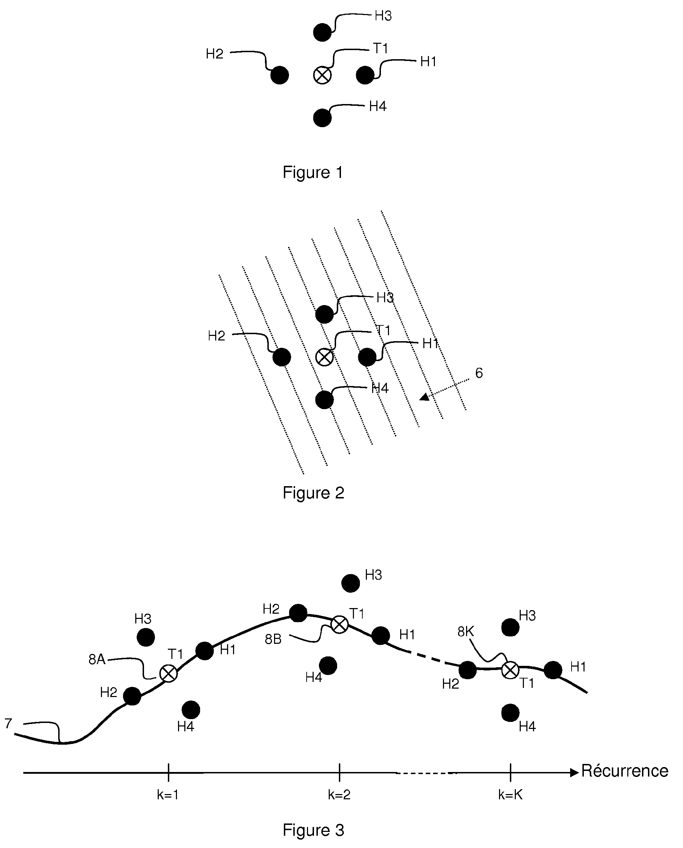

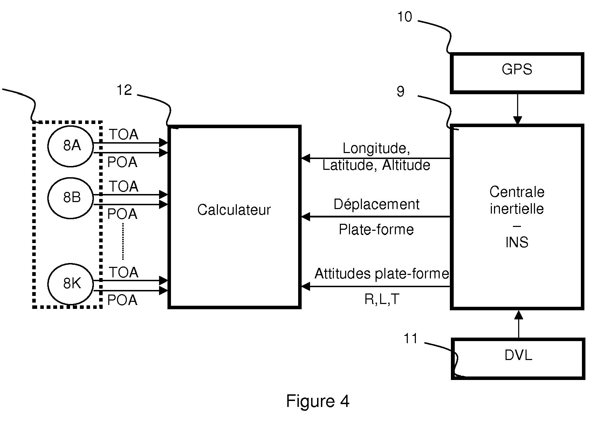

Sur les figures 1 et 2, on a représenté schématiquement le réseau de quatre hydrophones constituant l'antenne USBL ou SBL en absence (figure 1) et en présence (figure 2) du front d'onde émis par la balise à positionner. En figure 3, on a représenté le déplacement des différents capteurs qui composent le réseau de capteurs élémentaires au cours de K récurrences successives. En figure 4, on a schématisé les transferts de données entre les éléments qui composent le système de positionnement sont représentés.

Le système de positionnement global selon l'invention est représenté schématiquement sur la figure 1. L'antenne de positionnement USBL est composée d'un émetteur ou projecteur (T1) permettant d'interroger une balise (non représentée) en émettant, par exemple, un signal large bande à une fréquence comprise entre 5 000 Hz et 100 000 Hz avec une période, par exemple, de 1 seconde ou d'environ 3 secondes. A cet émetteur est associé un réseau de quatre hydrophones de réception (H1), (H2), (H3), (H4) constituant l'antenne acoustique fonctionnant dans une gamme de fréquences comprise entre 5 000 Hz et 100 000 Hz. L'ensemble est disposé sur une plate-forme mobile flottante ou sous-marine (non représentée).

Au cours d'un cycle de positionnement représenté sur la figure 2, le signal sonore émis par la balise (non représentée) consécutif à son interrogation par le projecteur T1 de l'antenne atteint le réseau de capteurs H1 à H4. Le front d'onde (6) qui parvient à l'antenne de réception est celui à partir duquel vont être déduites les mesures de TOA et/ou de POA de l'onde sonore sur les différents capteurs de l'antenne. Ces informations de TOA et/ou de POA, associées à la connaissance de la distance entre les différents hydrophones constituant le réseau de capteurs, permettent de remonter à une estimation de la position relative de la balise. La précision associée à cette estimation est conditionnée par des paramètres environnementaux tels que le rapport signal sur bruit et par des paramètres systèmes tels que la fréquence des ondes sonores utilisées et la distance entre les éléments composant le réseau de capteurs. Il est connu que la position absolue de la balise peut être déduite de la position relative en exploitant les informations d'attitude de la plate-forme R, L et T et la position géoréférencée (Longitude, Latitude, Altitude) fournies par la centrale inertielle. A chaque cycle ou récurrence acoustique, de nouvelles estimations des positions relative et absolue du transpondeur sont produites. Les positions estimées sont produites de manière indépendante les unes par rapport aux autres.

On a représenté sur la figure 3, les déplacements à une vitesse inférieure à 6 noeuds de la plate-forme mobile à K instants différents successifs, à K emplacements successifs (8A à 8K) sur une trajectoire (7). Le réseau de capteurs constituant l'antenne acoustique, étant solidaire de cette plate-forme, subit les mêmes déplacements. Pour chacun de K instants et emplacements successifs, l'antenne de positionnement reçoit l'onde émise par la balise fixe durant les récurrences acoustiques. Le procédé de l'invention consiste à exploiter les déplacements de la plate-forme, et donc de l'antenne acoustique, pour pallier la relativement faible précision de positionnement due à la faible distance entre les capteurs composant le réseau d'hydrophones. Les traitements à antenne synthétique appliqués dans le cadre du positionnement selon l'invention exploitent les informations fournies par la centrale inertielle pour estimer le déplacement du réseau d'hydrophones à chaque réception de l'onde sonore. La centrale inertielle recalée par l'information de position fournie par le GPS et/ou par l'information de vitesse instantanée fournie par le DVL permet de connaître précisément les distances parcourues par le réseau de capteurs entre les K réceptions du signal émis par le transpondeur. La connaissance du déplacement du récepteur permet de constituer un réseau d'hydrophones dont le nombre et la distance entre capteurs sont avantageusement plus grands que ceux du réseau élémentaire de la figure 1. Ce réseau synthétique ou virtuel de capteurs obtenu à partir des K positions associés aux informations acoustiques de TOA et/ou POA ainsi qu'aux attitudes de l'antenne élémentaire (R, L, T) au cours des K récurrences permet de fournir une estimation des positions relative et absolue du transpondeur. La précision de positionnement obtenue par le réseau de capteurs résultant de la combinaison des K récurrences acoustiques successives est accrue conformément à la définition l'expression de la précision des USBL évoqués en équation 1-1 ci-dessus.

On a représenté, sur la figure 4, les différents équipements intervenant dans le système de positionnement ainsi que les flux de données entre les équipements. La centrale inertielle (9) reçoit les informations de géoréférencement de la part du GPS (10) et/ou les informations de vitesse instantanée de la part du DVL (11) pour réduire sa dérive. La centrale inertielle transmet à haute cadence, par exemple 100 Hz, au calculateur (12) les informations de navigation (longitude, latitude, altitude), de déplacement et d'attitudes (R,L,T). Le calculateur reçoit également les informations de TOA et de POA issues de la détection du signal acoustique (13) sur le réseau de capteurs. Enfin, le calculateur détermine la position relative et absolue du transpondeur à partir des informations issues des K récurrences successives.

L'intérêt de la construction d'une antenne synthétique dans le contexte des systèmes de positionnement USBL ou SBL est de cumuler les avantages de précision associée à une antenne de grande dimension tout en conservant les avantages de faible encombrement et de portabilité du système classique. Les avantages sont, en particulier :

✓ Une précision de positionnement bien meilleure (par exemple selon un facteur 3) que celle d'un système USBL ou SBL classique du fait de l'augmentation de la taille du réseau de capteurs associés au déplacement de la plate-forme.

✓ Une robustesse de positionnement car l'exploitation de K cycles de positionnement permet de fournir une estimation de la position de la balise même si N-1 des N capteurs du réseau élémentaire ne détectent pas le signal émis par la balise. Avec les systèmes USBL ou SBL classiques, il est nécessaire de détecter le signal émis par la balise sur un minimum de 3 hydrophones pour fournir une position relative et absolue de la balise. En présence de bruit important ou de défaut de certains hydrophones, l'estimation de la position du transpondeur est impossible. L'exploitation des déplacements du réseau de capteurs permet de fournir une estimation de la position du transpondeur même si un seul hydrophone détecte le signal au cours des K récurrences.

✓ Une conservation du faible encombrement et de la facilité de déploiement permise par l'antenne USBL ou SBL car l'augmentation de la dimension du réseau de capteurs est obtenue par combinaison des récurrences acoustiques.

## Revendications

1. Procédé de positionnement acoustique global d'une cible marine ou sous-marine à l'aide d'une antenne de positionnement global de type à base ultra courte, USBL - Ultra Short Baseline, ou à base courte, SBL - Short Baseline, disposée sur une plate-forme mobile flottante (P) comportant un transducteur acoustique émetteur (T1) et au moins deux capteurs acoustiques (H1 à H4) ainsi qu'une centrale inertielle (9), et un calculateur (12), le procédé étant **caractérisé en ce qu'**il comprend la réalisation de K récurrences acoustiques successives à des emplacements successifs (8A à 8K), chaque récurrence acoustique comprenant une émission par le transducteur (T1) d'une impulsion acoustique pour interroger une balise placée sur la cible marine ou sous-marine, et une réception par les capteurs acoustiques (H1 à H4) d'une impulsion acoustique émise en retour par la balise, de sorte qu'un réseau synthétique de capteurs acoustiques est obtenu à partir des K emplacements successifs (8A à 8K), le procédé comprenant, en outre, une détermination d'une position géo-référencée unique de la balise à partir du réseau synthétique de capteurs acoustiques.

2. Procédé selon la revendication 1, **caractérisé en ce que** l'émetteur et les capteurs acoustiques fonctionnent à une fréquence comprise entre 5 et 100 kHz environ, et **en ce que** la période de récurrence des impulsions émises par le transducteur acoustique émetteur est d'environ 3 secondes.

3. Procédé selon la revendication 1 ou 2, **caractérisé en ce qu'**on mesure à chaque cycle acoustique les informations de temps d'arrivée et/ou de phase d'arrivée de l'onde émise par la balise sur le réseau synthétique de capteurs acoustiques.

4. Procédé selon l'une des revendications précédentes, **caractérisé en ce que** des déplacements et des orientations de la plate-forme au cours des récurrences acoustiques sont estimés par la centrale inertielle.

5. Procédé selon la revendication 4, **caractérisé en ce que** les orientations du réseau synthétique de capteurs acoustiques sont aussi utilisées par le calculateur pour déterminer le réseau synthétique de capteurs acoustiques.

6. Procédé selon la revendication 5, **caractérisé en ce que** les informations de temps d'arrivée et de phase d'arrivée issues des signaux arrivant sur le réseau de capteurs au cours des différentes récurrences, sont utilisées pour estimer la position relative et absolue de la cible.

**Patentansprüche**

1.  Verfahren zum globalen akustischen Positionieren eines See- oder Unterseeziels mit einer globalen Positionierungsantenne des Typs USBL (Ultra Short Baseline) oder SBL (Short Baseline) auf einer schwimmenden beweglichen Plattform (P), umfassend einen emittierenden akustischen Wandler (T1) und wenigstens zwei akustische Sensoren (H1 bis H4) sowie ein Trägheitssystem (9) und einen Computer (12), wobei das Verfahren **dadurch gekennzeichnet ist, dass** es das Ausführen von K aufeinander folgenden akustischen Wiederholungen an aufeinander folgenden Stellen (8A bis 8K) beinhaltet, wobei jede akustische Wiederholung eine Emission eines akustischen Pulses durch den Wandler (T1) zum Abfragen einer auf dem See- oder Unterseeziel platzierten Bake und einen Empfang eines von der Bake zurückgegebenen akustischen Impulses durch die akustischen Sensoren (H1 bis H4) beinhaltet, so dass eine synthetische Gruppe von akustischen Sensoren von den K aufeinander folgenden Stellen (8A bis 8K) erhalten wird, wobei das Verfahren ferner das Ermitteln einer einzigen georeferenzierten Position der Bake auf der Basis der synthetischen Gruppe von akustischen Sensoren beinhaltet.

2.  Verfahren nach Anspruch 1, **dadurch gekennzeichnet, dass** der Sender und die akustischen Sensoren mit einer Frequenz zwischen etwa 5 und 100 kHz arbeiten, und dadurch, dass die Wiederholperiode der von dem emittierenden akustischen Wandler emittierten Impulse etwa 3 Sekunden beträgt.

3.  Verfahren nach Anspruch 1 oder 2, **dadurch gekennzeichnet, dass** bei jedem akustischen Zyklus die Informationen von Ankunftszeit und/oder Ankunftsphase der von der Bake emittierten Welle auf der synthetischen Gruppe von akustischen Sensoren gemessen werden.

4.  Verfahren nach einem der vorherigen Ansprüche, **dadurch gekennzeichnet, dass** Bewegungen und Orientierungen der Plattform bei akustischen Wiederholungen durch das Trägheitssystem geschätzt werden.

5.  Verfahren nach Anspruch 4, **dadurch gekennzeichnet, dass** die Orientierungen der synthetischen Gruppe von akustischen Sensoren auch von dem Computer zum Ermitteln der synthetischen Gruppe von akustischen Sensoren benutzt werden.

6.  Verfahren nach Anspruch 5, **dadurch gekennzeichnet, dass** die Informationen von Ankunftszeit und Ankunftsphase, die von Signalen kommen, die an der Gruppe von Sensoren bei verschiedenen Wiederholungen ankommen, zum Schätzen der relativen und absoluten Position des Ziels benutzt werden.

**Claims**

1.  A method for the global acoustic positioning of a marine or submarine target using a global positioning antenna of the Ultra Short Baseline (USBL) or Short Baseline (SBL) type arranged on a floating movable platform (P) comprising an emitting acoustic transducer (T1) and at least two acoustic sensors (H1 to H4), as well as an inertial unit (9) and a computer (12), said method being **characterised in that** it comprises completing K successive acoustic repetitions at successive locations (8A to 8K), each acoustic repetition comprising an emission by said transducer (T1) of an acoustic pulse for polling a beacon placed on said marine or submarine target and a reception by said acoustic sensors (H1 to H4) of an acoustic pulse emitted back by said beacon, so that a synthetic array of acoustic sensors is obtained from the K successive locations (8A to 8K), said method further comprising the determination of a single georeferenced position of said beacon on the basis of said synthetic array of acoustic sensors.

2.  The method according to claim 1, **characterised in that** said emitter and said acoustic sensors operate at a frequency between approximately 5 and 100 kHz, and **in that** the period of recurrence of the pulses emitted by said emitting acoustic transducer is approximately 3 seconds.

3.  The method according to claim 1 or 2, **characterised in that**, during each acoustic cycle, the information is measured that relates to the time of arrival and/or the phase of arrival of the wave emitted by said beacon on said synthetic array of acoustic sensors.

4.  The method according to any one of the preceding claims, **characterised in that** movements and orientations of said platform during acoustic repetitions are estimated by said inertial unit.

5. The method according to claim 4, **characterised in that** the orientations of said synthetic array of acoustic sensors are also used by said computer to determine said synthetic array of acoustic sensors.

6. The method according to claim 5, **characterised in that** the time of arrival and phase of arrival information coming from signals arriving on said array of sensors during various repetitions is used to estimate the relative and absolute position of said target.

Figure 1

Figure 2

Figure 3

Figure 4

**EP 2 515 140 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2851340
- US 2006178829 A1

**Littérature non-brevet citée dans la description**

- **FRANÇOIS et al.** A better way to navigate on deep sea floors'' décrit un dispositif de positionnement acoustique comprenant un récepteur GPS et une centrale inertielle. *Le document Austin*
- **THOMAS et al.** *RATS, a relative acoustic tracking system developed for deep ocean navigation*